# EUROPÄISCHE PATENTSCHRIFT

(11) **EP 1 870 193 B1**
(45) Veröffentlichungstag und Bekanntmachung des Hinweises auf die Patenterteilung: **26.08.2009**
(21) Anmeldenummer: 07009749.8
(22) Anmeldetag: 16.05.2007
(51) Int. Cl.: B23K 26/02

(54) **Verfahren zum Herstellen eines Kraftfahrzeug-Anbauteils**
Method for manufacturing a motor vehicle attached part
Procédé de fabrication d'une pièce rapportée de véhicule automobile

(30) Priorität: 21.06.2006 DE 102006028441
(43) Veröffentlichungstag der Anmeldung: 26.12.2007
(73) Patentinhaber: Bayerische Motoren Werke Aktiengesellschaft, 80809 München (DE)
(72) Erfinder: Schindlbeck, Martin, 84088 Neufahrn (DE); Berndl, Jürgen, 85405 Nandlstadt (DE); Hornig, Hans, 83536 Gars (DE)

(56) Entgegenhaltungen:
- EP-A2- 0 178 394
- DE-B3- 10 317 552
- US-A- 5 221 585

## Beschreibung

Die Erfindung bezieht sich auf ein Verfahren zum Herstellen eines aus einem Innen- und einem Außenblech bestehenden Kraftfahrzeug-Anbauteils, nach dem Oberbegriff des Patentanspruchs 1.

Bei einem aus der DE 103 17 552 B3 bekannten Verfahren dieser Art wird das Außenblech auf der sichtbaren Seite mit einer zurückgebogenen Abkantung versehen und das Innenblech beim Fügeprozess einseitig gegen die Abkantung des Außenblechs geschoben, um unter Berücksichtigung von fertigungsbedingten Einbautoleranzen den Fügespalt zwischen den Blechteilen zu minimieren. In dieser Position wird das Innenblech dann am Außenrand mit der Abkantung des Außenblechs durch eine Kehlnaht lasergeschweißt oder -gelötet, während die Blechteile auf der gegenüberliegenden, nicht sichtbaren Seite des Anbauteils zwar gleichfalls miteinander verschweißt oder verlötet werden, aber flächig übereinanderliegend, so dass auf dieser Seite ein scharfkantiger Randabschluss in Form eines frei nach außen vorstehenden Doppelblechs entsteht.

Aufgabe der Erfindung ist es, das Verfahren der eingangs genannten Art so auszugestalten, dass ein umlaufend einwandfreier Randabschluss ohne frei nach außen vorstehende Blechteile mit einer qualitativ hochwertigen, stoffschlüssigen Verbindungsnaht zu erzielen ist.

Diese Aufgabe wird erfindungsgemäß durch das im Patentanspruch 1 gekennzeichnete Verfahren gelöst.

Erfindungsgemäß lässt sich aufgrund der zumindest teilweise elastischen Blechverformung, durch die die Abkantung des einen zum Außenrand des anderen Blechteils angedrückt wird, auf eine an sämtlichen Seiten des Anbauteils gleiche Weise ein Toleranzausgleich zur Minimierung des Fügespalts und ein sauberer Randabschluss ohne scharfkantig nach außen abstehende Blechvorsprünge erreichen, mit dem besonderen Effekt, dass die taschenförmigen Aussparungen im Falle einer mangelhaften Formhaltigkeit der Blechteile, etwa einer gewellten anstatt einer planaren Flächenform der Abkantungen, örtliche Ausgleichszonen für überschüssige Materialanhäufungen bilden und somit ebenso wie die elastische Blechverformung zur Minimierung des Fügespalts und damit zur Qualitätsverbesserung der stoffschlüssigen Verbindungsnaht beitragen.

Aus Gründen eines rationellen Fügeprozesses wird die stoffschlüssige Verbindung nicht als Klebe-, sondern vorzugsweise als gelaserte Schweiß- oder Lötnaht ausgebildet.

Um mit geringen Verformungskräften einen weitgehend konstanten Fügespalt zu erzielen, wird die Abkantung zweckmäßigerweise nicht über die gesamte Länge, sondern lediglich im Bereich der momentanen Schmelzfügestelle durch eine von außen einwirkende Druckkraft zum Außenrand des anderen Blechteils angedrückt, und aus Gründen einer baulichen Vereinfachung wird die Druckkraft vorzugsweise durch eine unter Federvorspannung an die Außenseite der Abkantung angepresste Druckrolle erzeugt.

Die an den Aussparungen jeweils unterbrochene Verbindungsnaht zwischen der Abkantung des einen und dem an diese stumpf anstoßenden Außenrand des anderen Blechteils kann sich über den gesamten Außenumfang des Anbauteils erstrecken, wird aber - anders als nach dem eingangs geschilderten Stand der Technik möglich - vorzugsweise an mindestens zwei einander gegenüberliegenden Seitenrändern des Anbauteils ausgebildet.

Aus Gründen einer exakten Verbindung der Blechteile schließlich empfiehlt es sich, diese beim Fügeprozess z. B. mit Hilfe von pneumatischen Saugern form- und lagestabil zu fixieren.

Die Erfindung wird nunmehr anhand eines Ausführungsbeispiels in Verbindung mit den Zeichnungen näher erläutert. Es zeigen in stark schematisierter Darstellung:
- **Fig. 1**: eine geschnittene Teilansicht des Randbereichs eines Anbauteils während des Fügeprozesses nach der Erfindung; und
- **Fig. 2**: eine der Fig. 1 entsprechende Teilansicht des Anbauteils in der Aufsicht.

Das in den Fign. dargestellte Anbauteil 1 in Gestalt einer Kraftfahrzeug-Rohbautür besteht aus einem Außenblech 2, welches mit randseitig zurückgebogenen Abkantungen 3 versehen ist, sowie einem hiervon getrennt vorgefertigten Innenblech 4, in welchem in Umfangsrichtung verteilt zum Außenrand 5 hin geöffnete, taschenförmige Aussparungen 6 ausgebildet sind.

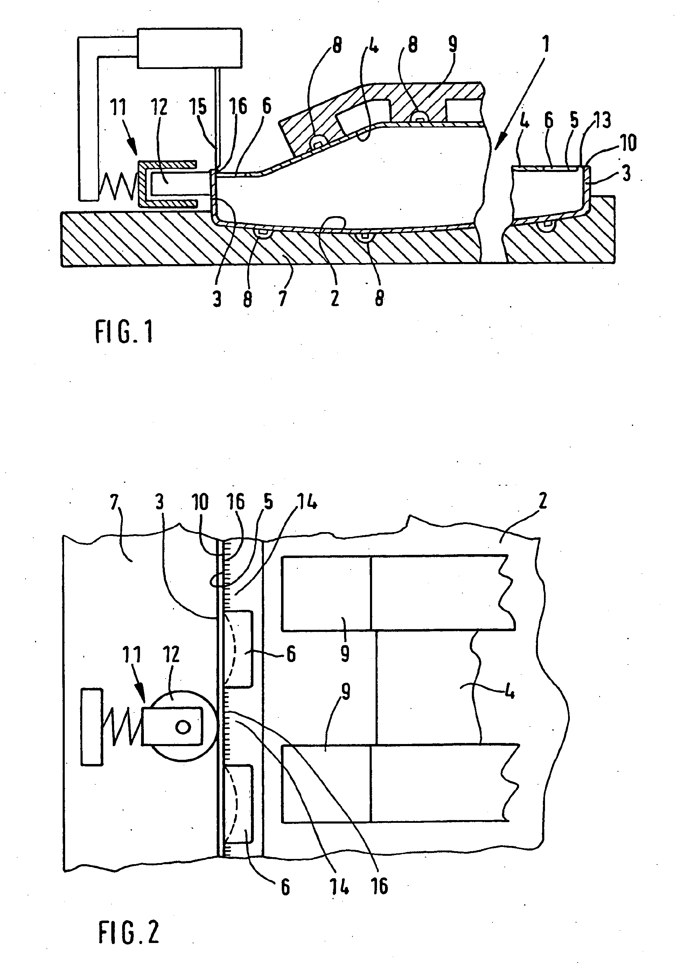

Zum Zusammenfügen der Blechteile 2, 4 wird das Außenblech 2 zunächst in ein Formbett 7 eingelegt und dort mit Hilfe von pneumatischen Saugern 8 lage- und formstabil fixiert. Anschließend wird das Innenblech 4, ebenfalls über pneumatische Sauger 8 an einem beweglich geführten Halter 9 formstabil fixiert und im Wesentlichen bündig mit der Oberkante 10 der Abkantungen 3 zwischen diese eingesetzt, woraufhin die Abkantungen 3 durch einen in Umfangsrichtung der Blechteile 2, 4 verfahrbar am Formbett 7 angeordneten Druckrollenmechanismus 11 mit einer federbelasteten, von außen auf die Abkantungen 3 einwirkenden Druckrolle 12 unter zumindest teilweise elastischer Biegeverformung fortschreitend an den Außenrand 5 des Innenblechs 4 angedrückt werden und dadurch der Fügespalt 13 zwischen den Abkantungen 3 und dem Außenrand 5 der Innenblechabschnitte 14 geschlossen wird, und gleichlaufend mit der Druckrolle 12 werden die Blechteile 2, 4 an ihren nunmehr stumpf aneinander stoßenden Rändern durch einen synchron mitgeführten Laserstrahl 15 miteinander verschweißt oder verlötet. Auf diese Weise lassen sich die Blechteile 2, 4 an sämtlichen abgekanteten, und zwar gemäß Fig. 1 an mindestens zwei einander gegenüberliegenden Seiten durch eine Schweiß- oder Lötnaht 16 stoffschlüssig miteinander verbinden und ein umlaufend glattflächiger Randabschluss ohne nach außen frei vorstehende Blechkanten erzielen.

Die hohe Fügenahtqualität zwischen den Abkantungen 3 der Außenbleche 2 und den randseitigen Blechabschnitten 14 der Innenbleche 4 wird zum einen durch die für den Ausgleich von Fertigungstoleranzen vorgesehene - zumindest teilweise elastische - Druckrollenverformung der Abkantungen 3, zum anderen aber auch dadurch garantiert, dass die taschenförmigen Aussparungen 6 Ausgleichszonen für einen örtlichen - in Fig. 2 durch gestrichelte Linien angedeuteten - Materialüberschuss bilden, wie er sich etwa aus lokalen Wärmedehnungen der Bleche 2, 4 an der jeweiligen Schweiß- oder Lötstelle oder aus einer mangelhaft planaren Flächenform der Abkantungen 3 ergibt.

## Patentansprüche

1. Verfahren zum Herstellen eines aus einem Innen- und einem Außenblech (2,4) bestehenden Kraftfahrzeug-Anbauteils, insbesondere einer Rohbautür, bei dem das eine Blechteil mit einer zurückgebogene Abkantung (3) versehen und an dieser mit dem Außenrand (5) des anderen Blechteils stoffschlüssig verbunden wird, **dadurch gekennzeichnet, dass**
eines der Blechteile am Außenrand (5) mit taschenförmigen Aussparungen (6) vorgefertigt und die Abkantung (3) des einen Blechteils beim Fügevorgang zur Minimierung des Fügespalts bis zur Verfestigung der stoffschlüssigen Verbindung durch eine zumindest teilweise elastische Blechverformung zum Außenrand des anderen Blechteils hin angedrückt wird.

2. Verfahren nach Anspruch 1, **dadurch gekennzeichnet, dass** die stoffschlüssige Verbindung als an den Aussparungen (6) unterbrochene Schweiß- oder Lötnaht ausgebildet wird.

3. Verfahren nach Anspruch 2, **dadurch gekennzeichnet, dass** die stoffschlüssige Verbindung lasergeschweißt oder -gelötet wird.

4. Verfahren nach einem der vorhergehenden Ansprüche, **dadurch gekennzeichnet, dass**
die Blechverformung durch eine zumindest im Bereich der momentanen Fügestelle von außen auf die Abkantung (3) einwirkende Druckkraft erzeugt wird.

5. Verfahren nach Anspruch 4, **dadurch gekennzeichnet, dass** die Druckkraft durch eine unter Federvorspannung an die Außenseite der Abkantung angepresste Druckrolle (12) aufgebracht wird.

6. Verfahren nach einem der vorhergehenden Ansprüche, **dadurch gekennzeichnet, dass**
die stoffschlüssige, im Bereich der Aussparungen (6) unterbrochene Verbindung an mindestens zwei einander gegenüberliegenden Seitenrändern des Anbauteils ausgebildet wird.

7. Verfahren nach einem der vorhergehenden Ansprüche, **dadurch gekennzeichnet, dass**
die Blechteile beim Fügeprozess mit Hilfe von pneumatischen Saugern (8) form- und lagestabil fixiert werden.

## Claims

1. A method of producing an attachment part, especially a carcase door, for a vehicle comprising an inner and an outer sheet metal covering (2, 4), wherein one metal component is given a bent edge (3) which is connected to the outer edge (5) of the other component via the material,
**characterised in that**
one metal part is formed with pocket-like recesses (6) on its outer edge (5) and the bent edge (3) of one metal part, during the joining process, is pressed by at least partly elastic metal deformation against the outer edge of the other part in order to reduce the gap until the connection via the material solidifies.

2. A method according to claim 1, **characterised in that**
the connection via the material is in the form of a weld or solder seam interrupted at the recesses (6).

3. A method according to claim 2, **characterised in that**
the connection is welded or soldered by laser.

4. A method according to any of the preceding claims, **characterised in that** the metal is deformed by pressure exerted from the exterior on the bent edge (3), at least in the neighbourhood of the instantaneous joint.

5. A method according to claim 4, **characterised in that**
the pressure is applied by a roller (12) pressed under initial spring tension against the outside of the bent edge.

6. A method according to any of the preceding claims, **characterised in that** the connection via the material, interrupted at the recesses (6), is made between at least two opposite side edges of the attachment part.

7. A method according to any of the preceding claims, **characterised in that** during the joining process the metal parts are held by pneumatic suction devices (8) so as to be dimensionally stable and remain firmly in position.

## Revendications

1. Procédé de fabrication d'une pièce rapportée de véhicule automobile composée d'une tôle intérieure et d'une tôle extérieure (2, 4), notamment d'une portière brute, selon lequel on munit la pièce de tôle d'une arête (3), repliée et on relie à celle-ci le bord extérieur (5) de l'autre pièce de tôle, par une liaison par la matière,
**caractérisé en ce que**
l'une des pièces de tôle est munie au préalable, au niveau du bord extérieur (5), de découpes (6) en forme de poches, et lors de l'opération d'assemblage, pour minimiser l'intervalle d'assemblage jusqu'à la fixation par la liaison par la matière, le bord replié (3) de l'une des pièces de tôle, est appliqué sous pression par une déformation, au moins partiellement élastique de la tôle, contre le bord extérieur de l'autre pièce de tôle.

2. Procédé selon la revendication 1,
**caractérisé en ce que**
la liaison par la matière est réalisée sous la forme d'un cordon de soudure ou de brasure, interrompu au niveau des découpes (6).

3. Procédé selon la revendication 2,
**caractérisé en ce que**
la liaison par la matière est soudée ou brasée au laser.

4. Procédé selon les revendications précédentes,
**caractérisé en ce que**
la déformation de la tôle est obtenue par une poussée exercée au moins au niveau de la zone d'assemblage instantané, de l'extérieur sur la partie repliée (3).

5. Procédé selon la revendication 4,
**caractérisé en ce que**
la poussée est appliquée par un galet de pression (12) soumis à la précontrainte d'un ressort et agissant sur le côté extérieur de la partie repliée.

6. Procédé selon les revendications précédentes,
**caractérisé en ce que**
la liaison par la matière, interrompue au niveau des découpes (6), est réalisée sur au moins deux bords latéraux opposés de la pièce rapportée.

7. Procédé selon les revendications précédentes,
**caractérisé en ce que**
lors du procédé d'assemblage, les pièces de tôle sont bloquées dans leur forme et dans leur position par des ventouses (8).
